# EUROPÄISCHE PATENTSCHRIFT

(11) **EP 1 654 568 B1**
(45) Veröffentlichungstag und Bekanntmachung des Hinweises auf die Patenterteilung: **01.12.2010**
(21) Anmeldenummer: 04763603.0
(22) Anmeldetag: 29.07.2004
(51) Int. Cl.: G02B 3/00, G02B 27/09

(54) **STRAHLFORMUNGSVORRICHTUNG**
BEAM-FORMING DEVICE
DISPOSITIF DE MISE EN FORME DE FAISCEAU

(30) Priorität: 01.08.2003 DE 10335271
(43) Veröffentlichungstag der Anmeldung: 10.05.2006
(73) Patentinhaber: LIMO Patentverwaltung GmbH & Co. KG, 36419 Gerstengrund (DE)
(72) Erfinder: LISSOTSCHENKO, Vitalij, 58730 Fröndenberg (DE); MIKHAILOV, Aleksei, 44227 Dortmund (DE)
(74) Vertreter: Basfeld, Rainer
(86) Internationale Anmeldenummer: PCT/EP2004/008500
(87) Internationale Veröffentlichungsnummer: WO 2005/012956

(56) Entgegenhaltungen:
- EP-A- 0 395 156
- EP-A- 1 176 435
- WO-A-98/10314
- US-B1- 6 343 862

## Beschreibung

Die vorliegende Erfindung betrifft ein Verfahren zur Herstellung einer optischen Strahlformungsvorrichtung, die auf mindestens einer optisch funktionalen Grenzfläche eine Mehrzahl von in mindestens einer Richtung versetzt zueinander angeordneten Linsenmitteln aufweist und aus mindestens zwei optisch funktionalen Bausteinen zusammengefügt wird. Darüber hinaus betrifft die vorliegende Erfindung eine optische Strahlformungsvorrichtung nach dem Oberbegriff des Anspruchs 17.

Als optische Strahlformungsvorrichtungen werden Anordnungen optisch funktionaler Elemente bezeichnet, die geeignet sind, die Strahlungscharakteristik eines Strahlbündels gezielt zu modifizieren, um beispielsweise eine definierte Form und eine über den Querschnitt des Strahlbündels definierte Intensitätsverteilung zu erhalten. Dabei ist es oftmals günstig, die optisch funktionalen Elemente in einer möglichst dichten Packung anzuordnen, um die vorgenannten Ziele zu erreichen. Es ist beispielsweise bekannt, sphärische Linsen hexagonal zueinander anzuordnen, um eine vergleichsweise hohe Fülldichte (Packungsdichte) der Linsen zu erhalten.

Die EP 1 176 435 A1 offenbart ein Verfahren zur Herstellung einer optischen Strahlformungsvorrichtung, die auf mindestens einer optisch funktionalen Grenzfläche eine Mehrzahl von in mindestens einer Richtung versetzt zueinander angeordneten Linsenmitteln aufweist und aus zwei optisch funktionalen Bausteinen zusammengefügt wird. Dabei werden sphärische beziehungsweise asphärische Linsenmittel verwendet.

Aus der WO 98/10314 ist bekannt, auf eine sphärisch-konvexe Grundfläche rotationssymmetrisch facettenartig einzelne Linsen einzuformen, die sphärisch, asphärisch oder zylindrisch, konvex oder konkav ausgebildet sein können und darüber hinaus auch unterschiedliche Brennweiten und/oder Aperturen haben können. Die Herstellung einer derartigen Anordnung ist allerdings relativ kompliziert und kostenintensiv.

Hier setzt die vorliegende Erfindung an.

Aufgabe der vorliegenden Erfindung ist es, ein Verfahren zur Herstellung einer optischen Strahlformungsvorrichtung der eingangs genannten Art sowie eine gattungsgemäße optische Strahlformungsvorrichtung zur Verfügung zu stellen, welche kostengünstiger herstellbar ist.

Diese Aufgabe wird zunächst durch ein Verfahren der eingangs genannten Art mit den kennzeichnenden Merkmalen des Anspruchs 1 gelöst.

Erfindungsgemäß wird vorgeschlagen, dass die Strahlformungsvorrichtung aus mindestens zwei optisch funktionalen Bausteinen zusammengefügt wird, wobei ein jeder der mindestens zwei optisch funktionalen Bausteine auf einer ersten optisch funktionalen Grenzfläche mindestens ein erstes Zylinderlinsenmittel und auf einer zweiten, der ersten im Wesentlichen gegenüberliegenden Grenzfläche mindestens ein zweites Zylinderlinsenmittel aufweist, dessen Zylinderachse im Wesentlichen senkrecht zu der Zylinderachse des auf der ersten Grenzfläche angeordneten Zylinderlinsenmittels ausgerichtet ist. Die mindestens zwei optisch funktionalen Bausteine werden dabei derart zusammengefügt, dass auf einer optisch funktionalen Grenzfläche der Strahlformungsvorrichtung die Zylinderlinsenmittel in einer Richtung versetzt zueinander angeordnet sind. Auf dieser Grenzfläche der Strahlformungsvorrichtung sind die Zylinderlinsenmittel dann quasi facettenartig angeordnet. Unter dem Begriff Zylinderlinsenmittel sollen hier Linsenmittel mit Zylindergeometrie und darüber hinaus auch Linsenmittel mit zylinderähnlicher Geometrie verstanden werden.

In einer bevorzugten Ausführungsform werden die mindestens zwei optisch funktionalen Bausteine so zusammengefügt, dass die Zylinderachsen der ersten Zylinderlinsenmittel auf einer ersten optisch funktionalen Grenzfläche der Strahlformungsvorrichtung mindestens teilweise parallel zueinander orientiert sind. Ferner können die mindestens zwei optisch funktionalen Bausteine so zusammengefügt, dass die Zylinderachsen der zweiten Zylinderlinsenmittel auf einer zweiten optisch funktionalen Grenzfläche der Strahlformungsvorrichtung mindestens teilweise parallel zueinander orientiert sind. Auf diese Weise werden bessere optische Eigenschaften der Strahlformungsvorrichtung erhalten.

In einer besonders bevorzugten Ausführungsform werden die mindestens zwei optisch funktionalen Bausteine aus mindestens einem Zylinderlinsen-Array mit einer Mehrzahl erster Zylinderlinsenmittel auf einer ersten Seite und einer Mehrzahl zweiter Zylinderlinsenmittel auf einer zweiten, der ersten Seite gegenüberliegenden Seite geschnitten. In dieser Ausführungsform lassen sich die mindestens zwei optisch funktionalen Bausteine in besonders einfacher Weise aus dem Zylinderlinsen-Array herstellen.

In einer bevorzugten Ausführungsform ist vorgesehen, dass das Zylinderlinsen-Array durch Ebenen geschnitten wird, die im Wesentlichen parallel zu den Längsachsen der ersten Zylinderlinsenmittel orientiert sind. Aus Symmetriegründen wird in einer besonders bevorzugten Ausführungsform das Zylinderlinsen-Array durch Ebenen geschnitten, welche sich jeweils durch Stoßkanten benachbarter erster Zylinderlinsenmittel erstrecken und welche die Zylinderachsen der zweiten Zylinderlinsenmittel orthogonal schneiden.

In einer besonders vorteilhaften Ausführungsform ist vorgesehen, dass die Längsseiten der optisch funktionalen Bausteine mindestens abschnittsweise konturiert werden, indem Segmente aus den Längsseiten herausgeschnitten werden. Auf diese Weise wird das Zusammenfügen der mindestens zwei optisch funktionalen Bausteine vereinfacht.

In einer besonders bevorzugten Ausführungsform ist vorgesehen, dass die Längsseiten mindestens abschnittsweise so konturiert werden, dass das Zusammenfügen der mindestens zwei optisch funktionalen Bausteine in der Weise erfolgt, dass die Zylinderlinsenmittel in mindestens einer Richtung versetzt zueinander angeordnet sind.

Aus Symmetriegründen und um das Zusammenfügen der optisch funktionalen Bausteine zu erleichtern, ist es vorteilhaft, dass aus den Längsseiten der optisch funktionalen Bausteine etwa gleich große Segmente herausgeschnitten werden.

In einer besonders bevorzugten Ausführungsform werden dabei aus den Längsseiten der optisch funktionalen Bausteine Segmente herausgeschnitten, deren Querschnitte einen im Wesentlichen dreiecksförmigen Umriss aufweisen. Auf diese Weise erhalten die Längsseiten der optisch funktionalen Bausteine eine Art Zick-Zack-Konturierung.

Vorteilhafterweise werden aus beiden einander gegenüberliegenden Längsseiten der optisch funktionalen Bausteine einander gegenüberliegend gleichartige Segmente herausgeschnitten, um den Aufwand beim späteren Zusammenfügen zu verringern.

Die optisch funktionalen Bausteine können in der Weise zusammengefügt werden, dass auf der einen Grenzfläche der Strahlformungsvorrichtung eine im Wesentlichen hexagonal gepackte Anordnung der zweiten Zylinderlinsenmittel gebildet wird.

Es hat sich gezeigt, dass das Zylinderlinsen-Array auf einfache Weise mittels Ultraschall, Elektronenstrahlen oder Laserstrahlen geschnitten und konturiert werden kann. Diese Herstellungsschritte können insbesondere auch rechnergestützt durchgeführt werden, um ein optimales Schnitt- und Konturierungsergebnis zu erhalten.

Um die Anordnung der einzelnen optisch funktionalen Bausteine nach dem Zusammenfügen dauerhaft zu stabilisieren, hat es sich als vorteilhaft erwiesen, dass die optisch funktionalen Bausteine zumindest abschnittsweise miteinander verklebt werden. Sie können alternativ dazu auch miteinander verlötet werden.

Die der vorliegenden Erfindung zugrundeliegende Aufgabe wird darüber hinaus durch eine Strahlformungsvorrichtung der eingangs genannten Art gelöst, die mittels eines Verfahrens nach einem der Ansprüche 1 bis 16 hergestellt ist.

Die Strahlformungsvorrichtung umfasst vorzugsweise Zylinderlinsenmittel, die konvex und/oder konkav geformt sind und sphärische und/oder asphärische Mantelflächen aufweisen.

Dabei können die Linsenmittel auf der mindestens einen optisch funktionalen Grenzfläche der Strahlformungsvorrichtung im Wesentlichen hexagonal dicht gepackt angeordnet sein.

Die äußere Kontur der Strahlformungsvorrichtung kann an verschiedene Anwendungszwecke angepasst werden und kann beispielsweise im Wesentlichen rund, rechteckig, quadratisch oder hexagonal sein

Die Strahlformungsvorrichtung besteht vorzugsweise aus Glas, insbesondere aus Quarzglas, oder aus Kunststoff.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: einen perspektivisch dargestellten Ausschnitt eines orthogonal gekreuzten Zylinderlinsen-Arrays, aus dem erfindungsgemäß eine Strahlformungsvorrichtung hergestellt wird;
- Fig. 2: eine perspektivische Ansicht eines optisch funktionalen Bausteins;
- Fig. 3: eine perspektivische Ansicht der Strahlformungsvorrichtung;
- Fig. 4: eine perspektivische Ansicht der Strahlformungsvorrichtung um 180° gedreht.

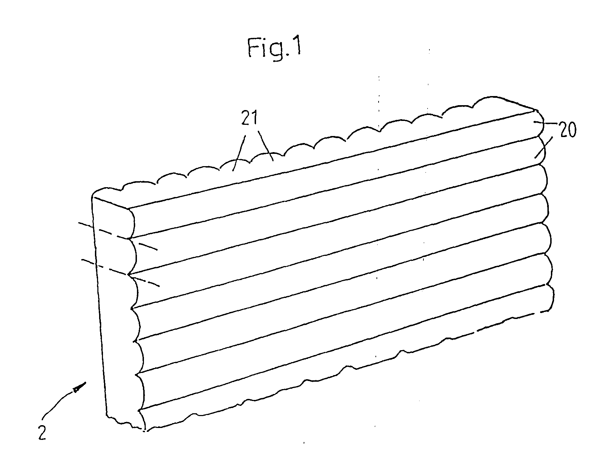

Zunächst wird auf Fig. 1 Bezug genommen. Darin ist perspektivisch ein Ausschnitt eines orthogonal gekreuzten Zylinderlinsen-Arrays 2 gezeigt, aus dem eine Strahlformungsvorrichtung 1 nach dem erfindungsgemäßen Verfahren hergestellt wird.

Man erkennt, dass das Zylinderlinsen-Array 2 auf einer Vorderseite, das heißt auf der dem Betrachter zugewandten Seite, eine Mehrzahl erster Zylinderlinsenmittel 20 aufweist, deren Längsachsen im Wesentlichen parallel zueinander orientiert sind. Die ersten Zylinderlinsenmittel 20 besitzen jeweils gekrümmte Mantelflächen, deren Abschluss Stoßkanten benachbarter erster Zylinderlinsenmittel 20 bilden.

Auf seiner Rückseite weist das Zylinderlinsen-Arrays 2 eine Mehrzahl zweiter Zylinderlinsenmittel 21 auf, deren Längsachsen ebenfalls im Wesentlichen parallel zueinander orientiert sind. Die zweiten Zylinderlinsenmittel 21 besitzen ebenfalls gekrümmte Mantelflächen, deren Abschluss wiederum die Stoßkanten zwischen benachbarten zweiten Zylinderlinsenmitteln 21 bilden.

Die Längsachsen (Zylinderachsen) der ersten Zylinderlinsenmittel 20 auf der Vorderseite sind erkennbar im Wesentlichen senkrecht zu den Längsachsen der zweiten Zylinderlinsenmittel 21 auf der Rückseite des Zylinderlinsen-Arrays 2 orientiert.

Ein derartiges Zylinderlinsen-Array 2, wie es in Fig. 1 gezeigt ist, bildet das Ausgangsmaterial für die Herstellung der Strahlformungsvorrichtung 1 unter Einsatz des erfindungsgemäßen Verfahrens. In dem hier dargestellten Ausführungsbeispiel sind sämtliche ersten und zweiten Zylinderlinsenmittel 20, 21 des orthogonal gekreuzten Zylinderlinsen-Arrays 2 konvex ausgeführt. Es ist natürlich auch möglich, dass die ersten und/oder die zweiten Zylinderlinsenmittel 20, 21 zumindest teilweise konkav sind. Im Allgemeinen wird ein derartiges Zylinderlinsen-Arrays 2 aus Glas, insbesondere aus Quarzglas hergestellt. Es ist mittlerweile auch möglich, Zylinderlinsen-Arrays aus Kunststoff herzustellen.

Erfindungsgemäß wird das Zylinderlinsen-Array 2 zunächst mehrfach achsparallel zu den Längsachsen der ersten Zylinderlinsenmittel 20 des Zylinderlinse-Arrays 2 geschnitten, um auf diese Weise eine Mehrzahl optisch funktionaler Bausteine 30, 31, 32, 33, auf die später unter Bezugnahme auf die übrigen Figuren näher eingegangen werden wird, zu erhalten. Die Schnittebenen, also die Ebenen entlang derer das Zylinderlinsen-Array 2 geschnitten wird, sind dabei im Wesentlichen parallel zu den Längsachsen der ersten Zylinderlinsenmittel 20 auf der Vorderseite und im Wesentlichen senkrecht zu den Längsachsen der zweiten Zylinderlinsenmittel 21 auf der Rückseite des Zylinderlinsen-Arrays 2 orientiert.

Dabei erstrecken sich die einzelnen Schnittebenen aus Symmetriegründen vorzugsweise jeweils durch die Stoßkanten zweier benachbarter Mantelflächen der ersten Zylinderlinsenmittel 20 auf der Vorderseite des Zylinderlinsen-Arrays 2 hindurch. Das Schneiden des Zylinderlinsen-Arrays 2 erfolgt vorzugsweise mittels Ultraschall, Elektronenstrahlen oder mit Hilfe von Lasern, insbesondere UV-Lasern.

Auf diese Weise werden optisch funktionale Bausteine 30, 31, 32, 33 erhalten, die auf einer ersten Seite ein einzelnes erstes Zylinderlinsenmittel 20 und auf einer zweiten, der ersten Seite gegenüberliegenden Seite eine Mehrzahl zweiter Zylinderlinsenmittel 21 aufweisen.

Erfindungsgemäß werden wenigstens zwei dieser optisch funktionalen Bausteine 30, 31, 32, 33 in einem nächsten Schritt zu der Strahlformungsvorrichtung 1 zusammengefügt, wobei die zweiten Zylinderlinsenmittel 21 auf einer Grenzfläche der Strahlformungsvorrichtung 1 facettenartig zueinander versetzt angeordnet werden.

Um das Zusammenfügen der optisch funktionalen Bausteine 30, 31, 32, 33 zu vereinfachen und auf der einen Grenzfläche der Strahlformungsvorrichtung 1 die bereits genannte facettenartige Anordnung der zweiten Zylinderlinsenmittel 21 zu erhalten, werden jeweils beide Längsseiten der optisch funktionalen Bausteine 30, 31, 32, 33 mit einer Art Zick-Zack-Struktur konturiert. Dabei werden in Längsrichtung gesehen fortlaufend Segmente aus Seitenrändern eines jeden optisch funktionalen Bausteins 30, 31, 32, 33 geschnitten. Die einzelnen Segmente sind dabei vorzugsweise gleich groß und besitzen einen Querschnitt mit im Wesentlichen dreiecksförmigem Umriss. Das Herausschneiden der Segmente kann wiederum vorzugsweise mittels Ultraschall oder mit Hilfe von Lasern, insbesondere UV-Lasern oder Elektronenstrahlen erfolgen.

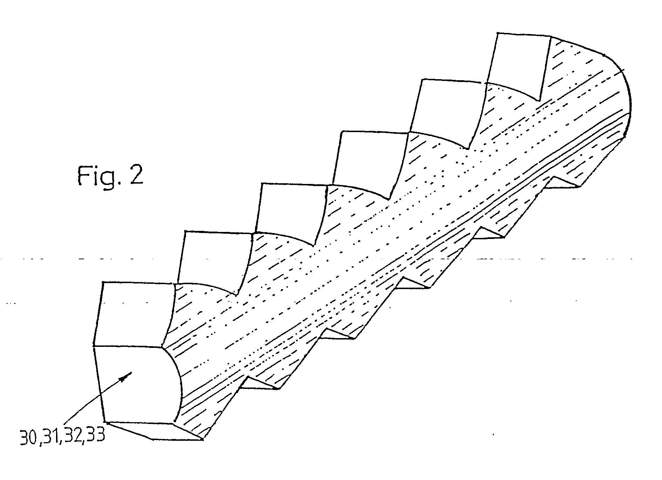

In Fig. 2 ist beispielhaft ein optisch funktionaler Baustein 30, 31, 32 ,33 gezeigt, der aus dem Zylinderlinsen-Array 2 herausgeschnitten wurde und aus dessen Seitenrändern fortlaufend gleichartige Segmente mit etwa dreiecksförmigen Umrissen herausgeschnitten wurden, um auf diese Weise die Zick-Zack-Strukturen zu erhalten. Man erkennt, dass diese Zick-Zack-Strukturen in gleicher Weise im Bereich beider Seitenränder, und zwar einander gegenüberliegend vorhanden sind. Diese Eigenschaft des so hergestellten optisch funktionalen Bausteins 30, 31, 32, 33 vereinfacht das Zusammenfügen mehrerer derartiger Bausteine.

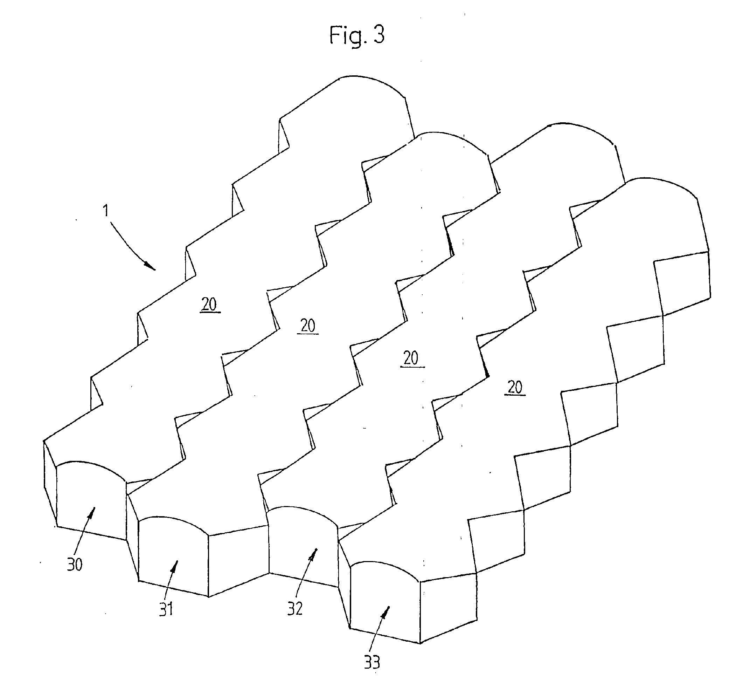

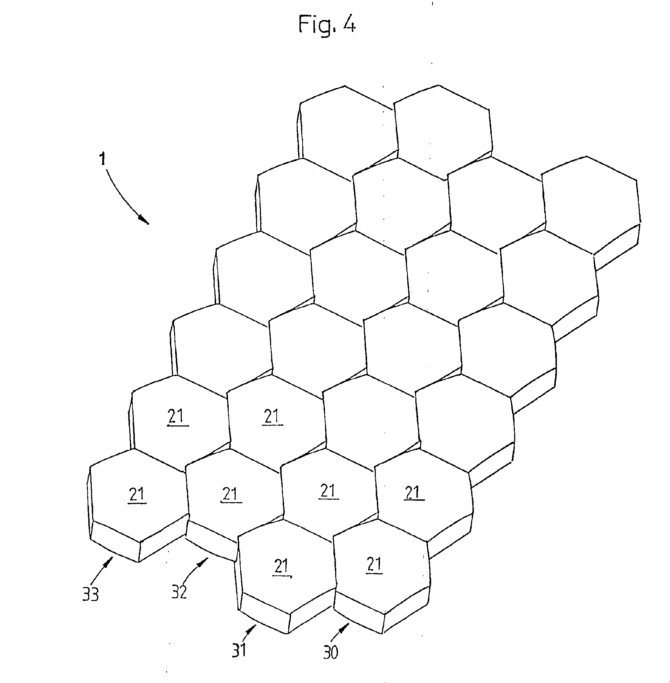

Nachdem die optisch funktionalen Bausteine 30, 31, 32, 33, wie soeben beschrieben, konturiert wurden, können sie zu der Strahlformungsvorrichtung 1 gemäß Fig. 3 und Fig. 4 zusammengefügt werden.

Eine Strahlformungsvorrichtung 1, die aus vier optisch funktionalen Bausteinen 30, 31, 32, 33 zusammengesetzt wurde, ist in Fig. 3 und Fig. 4 perspektivisch dargestellt. Die Blickrichtungen sind jeweils um 180° zueinander gedreht.

Aus Fig. 3 wird deutlich, dass sich die Längsachsen der ersten Zylinderlinsenmittel 20 der vier optisch funktionalen Bausteine 30, 31, 32, 33 auch nach dem Zusammenfügen im Wesentlichen parallel zueinander erstrecken. Man erkennt ferner die Krümmung der ersten Zylinderlinsenmittel 20 auf der hier gezeigten zweiten Grenzfläche der Strahlformungsvorrichtung 1. In die Bereiche, aus denen die Segmente herausgeschnitten wurden ragen die Bereiche der Seitenränder benachbarter optisch funktionaler Bausteine 30, 31, 32, 33 hinein, die nicht, wie oben beschrieben, konturiert wurden. Es wird somit deutlich, dass die Zick-Zack-Strukturierungen beider Seitenränder das Zusammenfügen der optisch funktionalen Bausteine 30, 31, 32, 33 vereinfacht.

Die optisch funktionalen Bausteine 30, 31, 32, 33 können mindestens abschnittsweise verklebt oder verlötet werden, um einen stabilen und dauerhaften Verbund zu bilden.

Fig. 4 zeigt die nach dem erfindungsgemäßen Verfahren hergestellte Strahlformungsvorrichtung 1 von einer zweiten Seite. Diese Ansicht ist also zu der aus Fig. 3 um 180° gedreht. Diese Darstellung veranschaulicht die facettenartige, zueinander versetzte Anordnung der zweiten Zylinderlinsenmittel 21 auf der zweiten Grenzfläche der Strahlformungsvorrichtung 1. Das bedeutet, dass etwa im Bereich einer Stoßkante zweier axial hintereinanderliegender zweiter Zylinderlinsenmittel 21 eines ersten optisch funktionalen Bausteins 30, 31, 32, 33 die Mantelflächen der zweiten Zylinderlinsenmittel 21 eines benachbarten optisch funktionalen Bausteins 30, 31, 32, 33 gerade ihren Scheitelpunkt durchlaufen.

Insgesamt weist die nach dem erfindungsgemäßen Verfahren hergestellte Strahlformungsvorrichtung 1 einen hohen Füllfaktor auf. Die zweiten Linsenmittel 21 auf der zweiten Grenzfläche der Strahlformungsvorrichtung 1 sind relativ dicht, und zwar im Wesentlichen hexagonal gepackt.

Es soll an dieser Stelle noch einmal verdeutlicht werden, dass die äußere Kontur der Strahlformungsvorrichtung 1 beliebig sein kann. Beispielsweise können rechteckige, quadratische, hexagonale oder auch im Wesentlichen kreisförmige äußere Konturen mit dem erfindungsgemäßen Verfahren hergestellt werden.

Im Vergleich zu dem aus dem Stand der Technik bekannten Verfahren zur Herstellung einer dichtgepackten Linsenanordnung, ist das erfindungsgemäße Verfahren relativ kostengünstig, da die Zylinderlinsen-Arrays 2, die als Ausgangsmaterialien eingesetzt werden, in Serie hergestellt werden können.

## Patentansprüche

1. Verfahren zur Herstellung einer optischen Strahlformungsvorrichtung (1), die auf mindestens einer optisch funktionalen Grenzfläche eine Mehrzahl von in mindestens einer Richtung versetzt zueinander angeordneten Linsenmitteln aufweist und aus mindestens zwei optisch funktionalen Bausteinen (30, 31, 32, 33) zusammengefügt wird, **dadurch gekennzeichnet, dass** ein jeder der mindestens zwei optisch funktionalen Bausteine (30, 31, 32, 33) auf einer ersten optisch funktionalen Grenzfläche mindestens ein erstes Zylinderlinsenmittel (20) und auf einer zweiten, der ersten im Wesentlichen gegenüberliegenden optisch funktionalen Grenzfläche mindestens ein zweites Zylinderlinsenmittel (21) aufweist, dessen Zylinderachse im Wesentlichen senkrecht zu der Zylinderachse des auf der ersten Grenzfläche angeordneten ersten Zylinderlinsenmittels (20) ausgerichtet ist.

2. Verfahren nach Anspruch 1, **dadurch gekennzeichnet, dass** die mindestens zwei optisch funktionalen Bausteine (30, 31, 32, 33) so zusammengefügt werden, dass die Zylinderachsen der ersten Zylinderlinsenmittel (20) auf einer ersten optisch funktionalen Grenzfläche der Strahlformungsvorrichtung (1) mindestens teilweise parallel zueinander orientiert sind.

3. Verfahren nach Anspruch 1 oder 2, **dadurch gekennzeichnet, dass** die mindestens zwei optisch funktionalen Bausteine (30, 31, 32, 33) so zusammengefügt werden, dass die Zylinderachsen der zweiten Zylinderlinsenmittel (21) auf einer zweiten optisch funktionalen Grenzfläche der Strahlformungsvorrichtung (1) mindestens teilweise parallel zueinander orientiert sind.

4. Verfahren nach einem der Ansprüche 1 bis 3, **dadurch gekennzeichnet, dass** die mindestens zwei optisch funktionalen Bausteine (30, 31, 32, 33) aus mindestens einem Zylinderlinsen-Array (2) mit einer Mehrzahl erster Zylinderlinsenmittel (20) auf einer ersten Seite und einer Mehrzahl zweiter Zylinderlinsenmittel (21) auf einer zweiten, der ersten gegenüberliegenden Seite geschnitten werden.

5. Verfahren nach Anspruch 4, **dadurch gekennzeichnet, dass** das Zylinderlinsen-Array (2) durch Ebenen geschnitten wird, die im Wesentlichen parallel zu den Zylinderachsen der ersten Zylinderlinsenmittel (20) orientiert sind.

6. Verfahren nach Anspruch 4 oder 5, **dadurch gekennzeichnet, dass** das Zylinderlinsen-Array (2) durch Ebenen geschnitten wird, welche sich jeweils durch Stoßkanten benachbarter erster Zylinderlinsenmittel (20) erstrecken und welche die Zylinderachsen der zweiten Zylinderlinsenmittel (21) orthogonal schneiden.

7. Verfahren nach einem der Ansprüche 1 bis 6, **dadurch gekennzeichnet, dass** Längsseiten der optisch funktionalen Bausteine (30, 31, 32, 33) mindestens abschnittsweise konturiert werden, indem Segmente aus den Längsseiten herausgeschnitten werden.

8. Verfahren nach Anspruch 7, **dadurch gekennzeichnet, dass** die Längsseiten mindestens abschnittsweise so konturiert werden, dass das Zusammenfügen der mindestens zwei optisch funktionalen Bausteine (30, 31, 32, 33) in der Weise erfolgt, dass die zweiten Zylinderlinsenmittel (21) in mindestens einer Richtung versetzt zueinander angeordnet sind.

9. Verfahren nach Anspruch 7 oder 8, **dadurch gekennzeichnet, dass** aus den Längsseiten der optisch funktionalen Bausteine (30, 31, 32, 33) gleich große Segmente herausgeschnitten werden.

10. Verfahren nach einem der Ansprüche 7 bis 9, **dadurch gekennzeichnet, dass** aus den Längsseiten der optisch funktionalen Bausteine (30, 31, 32, 33) Segmente herausgeschnitten werden, deren Querschnitte einen im Wesentlichen dreiecksförmigen Umriss aufweisen.

11. Verfahren nach einem der Ansprüche 1 bis 10, **dadurch gekennzeichnet, dass** die optisch funktionalen Bausteine (30, 31, 32, 33) in der Weise zusammengefügt werden, dass auf der einen zweiten Grenzfläche der Strahlformungsvorrichtung eine im Wesentlichen hexagonal gepackte Anordnung der zweiten Zylinderlinsenmittel (21) gebildet wird.

12. Verfahren nach einem der Ansprüche 1 bis 11, **dadurch gekennzeichnet, dass** die optisch funktionalen Bausteine (30, 31, 32, 33) mittels Ultraschall aus dem Zylinderlinsen-Array (2) geschnitten und konturiert werden.

13. Verfahren nach einem der Ansprüche 1 bis 11, **dadurch gekennzeichnet, dass** die optisch funktionalen Bausteine (30, 31, 32, 33) mittels Laserstrahlen aus dem Zylinderlinsen-Array (2) geschnitten und konturiert werden.

14. Verfahren nach einem der Ansprüche 1 bis 11, **dadurch gekennzeichnet, dass** die optisch funktionalen Bausteine (30, 31, 32, 33) mittels Elektronenstrahlen aus dem Zylinderlinsen-Array (2) geschnitten und konturiert werden.

15. Verfahren nach einem der Ansprüche 1 bis 14, **dadurch gekennzeichnet, dass** die optisch funktionalen Bausteine (30, 31, 32, 33) zumindest abschnittsweise miteinander verklebt werden.

16. Verfahren nach einem der Ansprüche 1 bis 15, **dadurch gekennzeichnet, dass** die optisch funktionalen Bausteine (30, 31, 32, 33) zumindest abschnittsweise miteinander verlötet werden.

17. Strahlformungsvorrichtung (1), die auf mindestens einer optisch funktionalen Grenzfläche eine Mehrzahl von in mindestens einer Richtung versetzt zueinander angeordneten Linsenmitteln aufweist und aus mindestens zwei optisch funktionalen Bausteinen (30, 31, 32, 33) zusammengefügt ist, **dadurch gekennzeichnet, dass** die Strahlformungsvorrichtung (1) mittels eines Verfahrens nach einem der Ansprüche 1 bis 16 hergestellt ist.

18. Strahlformungsvorrichtung (1) nach Anspruch 17, **dadurch gekennzeichnet, dass** die Strahlformungsvorrichtung (1) Zylinderlinsenmittel (20, 21) umfasst, die konvex und/oder konkav geformt sind und sphärische und/oder asphärische Mantelflächen aufweisen.

19. Strahlformungsvorrichtung (1) nach Anspruch 17 oder 18, **dadurch gekennzeichnet, dass** die Linsenmittel auf der mindestens einen optisch funktionalen Grenzfläche der Strahlformungsvorrichtung (1) im Wesentlichen hexagonal dicht gepackt angeordnet sind.

20. Strahlformungsvorrichtung (1) nach einem der Ansprüche 17 bis 19, **dadurch gekennzeichnet, dass** eine äußere Kontur der Strahlformungsvorrichtung (1) im Wesentlichen rund, rechteckig, quadratisch oder hexagonal ist.

21. Strahlformungsvorrichtung (1) nach einem der Ansprüche 17 bis 20, **dadurch gekennzeichnet, dass** die Strahlformungsvorrichtung (1) aus Glas, insbesondere aus Quarzglas, oder aus Kunststoff besteht.

## Claims

1. Method for producing an optical beam shaping device (1) which has on at least one optically functional interface a plurality of lens means arranged offset from one another in at least one direction, and is assembled from at least two optically functional modules (30, 31, 32, 33), **characterized in that** in each one of the at least two optically functional modules (30, 31, 32, 33) has on a first optically functional interface at least a first cylindrical lens means (20), and on a second optically functional interface, situated substantially opposite the first one, at least a second cylindrical lens means (21), the cylinder axis of the latter being aligned substantially perpendicular to the cylinder axis of the first cylindrical lens means (20) arranged on the first interface.

2. Method according to claim 1, **characterized in that** the at least two optically functional modules (30, 31, 32, 33) are assembled such that the cylinder axes of the first cylindrical lens means (20) are orientated at least partially parallel to one another on a first optically functional interface of the beam shaping device (1).

3. Method according to claim 1 or 2, **characterized in that** the at least two optically functional modules (30, 31, 32, 33) are assembled such that the cylinder axes of the second cylindrical lens means (21) are orientated at least partially parallel to one another on a second optically functional interface of the beam shaping device (1).

4. Method according to one of claims 1 to 3, **characterized in that** the at least two optically functional modules (30, 31, 32, 33) are cut from at least one cylindrical lens array (2) with a plurality of first cylindrical lens means (20) on a first side, and with a plurality of second cylindrical lens means (21) on a second side, situated opposite the first one.

5. Method according to claim 4, **characterized in that** the cylindrical lens array (2) is cut through planes which are orientated substantially parallel to the cylinder axes of the first cylindrical lens means (20).

6. Method according to claim 4 or 5, **characterized in that** the cylindrical lens array (2) is cut through planes which respectively extend through abutting edges of adjacent first cylindrical lens means (20) and which intersect the cylinder axes of the second cylindrical lens means (21) orthogonally.

7. Method according to one of claims 1 to 6, **characterized in that** long sides of the optically functional modules (30, 31, 32, 33) are contoured at least in sections by cutting segments out of the long sides.

8. Method according to claim 7, **characterized in that** the long sides are contoured at least in sections such that the assembly of the at least two optically functional modules (30, 31, 32, 33) is performed in such a way that the second cylindrical lens means (21) are arranged offset from one another in at least one direction.

9. Method according to claim 7 or 8, **characterized in that** segments of equal size are cut out from the long sides of the optically functional modules (30, 31, 32, 33).

10. Method according to one of claims 7 to 9, **characterized in that** segments whose cross sections have a substantially triangular outline are cut out from the long sides of the optically functional modules (30, 31, 32, 33).

11. Method according to one of claims 1 to 10, **characterized in that** the optically functional modules (30, 31, 32, 33) are assembled in such a way that a substantially hexagonally packed arrangement of the second cylindrical lens means (21) is formed on the one second interface of the beam shaping device.

12. Method according to one of claims 1 to 11, **characterized in that** the optically functional modules (30, 31, 32, 33) are cut from the cylindrical lens array (2) and contoured by means of ultrasound.

13. Method according to one of claims 1 to 11, **characterized in that** the optically functional modules (30, 31, 32, 33) are cut from the cylindrical lens array (2) and contoured by means of laser beams.

14. Method according to one of claims 1 to 11, **characterized in that** the optically functional modules (30, 31, 32, 33) are cut from the cylindrical lens array (2) and contoured by means of electron beams.

15. Method according to one of claims 1 to 14, **characterized in that** the optically functional modules (30, 31, 32, 33) are cemented to one another at least in sections.

16. Method according to one of claims 1 to 15, **characterized in that** the optically functional modules (30, 31, 32, 33) are soldered to one another at least in sections.

17. Beam shaping device (1) which has on at least one optically functional interface a plurality of lens means arranged offset from one another in at least one direction, and is assembled from at least two optically functional modules (30, 31, 32, 33), **characterized in that** the beam shaping device (1) is produced by means of a method according to one of claims 1 to 16.

18. Beam shaping device (1) according to claim 17, **characterized in that** the beam shaping device (1) comprises cylindrical lens means (20, 21) which are shaped convexly and/or concavely and have spherical and/or aspherical lateral surfaces.

19. Beam shaping device (1) according to claim 17 or 18, **characterized in that** the lens means are arranged in a substantially hexagonally tightly packed fashion on the at least one optically functional interface of the beam shaping device (1).

20. Beam shaping device (1) according to one of claims 17 to 19, **characterized in that** an outer contour of the beam shaping device (1) is substantially round, rectangular, square or hexagonal.

21. Beam shaping device (1) according to one of claims 17 to 20, **characterized in that** the beam shaping device (1) consists of glass, in particular of silica glass, or of plastic.

## Revendications

1. Procédé de fabrication d'un dispositif (1) de mise en forme de faisceau qui présente sur au moins une surface frontière à fonction optique plusieurs moyens en forme de lentille disposés à décalage mutuel dans au moins une direction et qui est constitué de l'assemblage d'au moins deux modules (30, 31, 32, 33) à fonction optique, **caractérisé en ce que** sur une première surface frontière à fonction optique, l'un des deux ou plusieurs modules (30, 31, 32, 33) à fonction optique présente au moins un premier moyen (20) en forme de lentille cylindrique et sur une deuxième surface frontière à fonction optique, située essentiellement face à la première surface frontière, au moins un deuxième moyen (21) en forme de lentille cylindrique dont l'axe du cylindre est orienté essentiellement à la perpendiculaire de l'axe du cylindre du premier moyen (20) en forme de lentille cylindrique disposé sur la première surface frontière.

2. Procédé selon la revendication 1, **caractérisé en ce que** les deux ou plusieurs modules (30, 31, 32, 33) à fonction optique sont assemblés de telle sorte que les axes de cylindre d'au moins certains des premiers moyens (20) en forme de lentille cylindrique situés sur une première surface frontière à fonction optique du dispositif (1) de mise en forme de faisceau sont orientés parallèlement les uns aux autres.

3. Procédé selon les revendications 1 ou 2, **caractérisé en ce que** les deux ou plusieurs modules (30, 31, 32, 33) à fonction optique sont assemblés de telle sorte que les axes de cylindre d'au moins certains des deuxièmes moyens (21) en forme de lentille cylindriques situés sur une deuxième surface frontière à fonction optique du dispositif (1) de mise en forme de faisceau sont orientés parallèlement les uns aux autres.

4. Procédé selon l'une des revendications 1 à 3, **caractérisé en ce que** les deux ou plusieurs modules (30, 31, 32, 33) à fonction optique sont découpés dans au moins une batterie (2) de lentilles cylindriques qui présente plusieurs premiers moyens (20) en forme de lentille cylindrique sur un premier côté et plusieurs deuxièmes moyens (21) en forme de lentille cylindrique sur un deuxième côté situé face au premier côté.

5. Procédé selon la revendication 4, **caractérisé en ce que** la batterie (2) de lentilles cylindriques est découpée dans des plans orientés essentiellement en parallèle aux axes de cylindre des premiers moyens (20) en forme de lentille cylindrique.

6. Procédé selon les revendications 4 ou 5, **caractérisé en ce que** la batterie (2) de lentilles cylindriques est découpée par des plans qui passent par les arêtes de butée de premiers moyens (20) en forme de lentille cylindrique voisins et qui coupent perpendiculairement les axes de cylindre des deuxièmes moyens (21) en forme de lentille cylindrique.

7. Procédé selon l'une des revendications 1 à 6, **caractérisé en ce qu'**au moins certaines parties des côtés longitudinaux des modules (30, 31, 32, 33) à fonction optique sont profilées en découpant des segments dans les côtés longitudinaux.

8. Procédé selon la revendication 7, **caractérisé en ce qu'**au moins certaines parties des côtés longitudinaux sont profilées de telle sorte que l'assemblage des deux ou plusieurs modules (30, 31, 32, 33) à fonction optique s'effectue en disposant les deuxièmes moyens (21) en forme de lentille cylindrique en décalage mutuel dans au moins une direction.

9. Procédé selon les revendications 7 ou 8, **caractérisé en ce que** des segments de même taille sont découpés dans les côtés longitudinaux des modules (30, 31, 32, 33) à fonction optique.

10. Procédé selon l'une des revendications 7 à 9, **caractérisé en ce que** des segments dont la section transversale présente un périmètre essentiellement triangulaire sont découpés dans les côtés longitudinaux des modules (30, 31, 32, 33) à fonction optique.

11. Procédé selon l'une des revendications 1 à 10, **caractérisé en ce que** les modules (30, 31, 32, 33) à fonction optique sont assemblés en formant sur l'une des deuxièmes surfaces frontières du dispositif de mise en forme de faisceau un agencement essentiellement hexagonal compact de deuxièmes moyens (21) en forme de lentille cylindrique.

12. Procédé selon l'une des revendications 1 à 11, **caractérisé en ce que** les modules (30, 31, 32, 33) à fonction optique sont découpés et profilés dans la batterie (2) de lentilles cylindriques au moyen d'ultrasons.

13. Procédé selon l'une des revendications 1 à 11, **caractérisé en ce que** les modules (30, 31, 32, 33) à fonction optique sont découpés et profilés dans la batterie (2) de lentilles cylindriques au moyen de faisceaux laser.

14. Procédé selon l'une des revendications 1 à 11, **caractérisé en ce que** les modules (30, 31, 32, 33) à fonction optique sont découpés et profilés dans la batterie (2) de lentilles cylindriques au moyen de faisceaux d'électrons.

15. Procédé selon l'une des revendications 1 à 14, **caractérisé en ce qu'**au moins certaines parties des modules (30, 31, 32, 33) à fonction optique sont collées les unes aux autres.

16. Procédé selon l'une des revendications 1 à 15, **caractérisé en ce qu'**au moins certaines parties des modules (30, 31, 32, 33) à fonction optique sont brasées les unes aux autres.

17. Dispositif (1) de mise en forme de faisceau qui présente sur au moins une surface frontière à fonction optique plusieurs moyens en forme de lentille disposés à décalage mutuel dans au moins une direction et qui est constitué de l'assemblage d'au moins deux modules (30, 31, 32, 33) à fonction optique, **caractérisé en ce que** le dispositif (1) de mise en forme de faisceau est fabriqué au moyen d'un procédé selon l'une des revendications 1 à 16.

18. Dispositif (1) de mise en forme de faisceau selon la revendication 17, **caractérisé en ce que** le dispositif (1) de mise en forme de faisceau comporte des moyens (20, 21) en forme de lentille cylindrique de forme convexe et/ou de forme concave et qui présentent des surfaces d'enveloppe sphériques et/ou des surfaces d'enveloppe non sphériques.

19. Dispositif (1) de mise en forme de faisceau selon les revendications 17 ou 18, **caractérisé en ce que** les moyens en forme de lentille sont disposés essentiellement en empilement hexagonal compact sur la ou les surfaces frontières à fonction optique du dispositif (1) de mise en forme de faisceau.

20. Dispositif (1) de mise en forme de faisceau selon l'une des revendications 17 à 19, **caractérisé en ce que** le profil extérieur du dispositif (1) de mise en forme de faisceau est essentiellement circulaire, rectangulaire, carré ou hexagonal.

21. Dispositif (1) de mise en forme de faisceau selon l'une des revendications 17 à 20, **caractérisé en ce que** le dispositif (1) de mise en forme de faisceau est constitué de verre, en particulier de verre de quartz, ou de matière synthétique.
